# EUROPÄISCHE PATENTSCHRIFT

(11) **EP 1 386 784 B1**
(45) Veröffentlichungstag und Bekanntmachung des Hinweises auf die Patenterteilung: **09.09.2009**
(21) Anmeldenummer: 03015925.5
(22) Anmeldetag: 12.07.2003
(51) Int. Cl.: B60R 5/04

(54) **Schutzvorrichtung für ein Kraftfahrzeug**
Protection device for a vehicle
Dispositif de protection pour une voiture

(30) Priorität: 31.07.2002 DE 10235870
(43) Veröffentlichungstag der Anmeldung: 04.02.2004
(73) Patentinhaber: BOS GmbH & Co. KG, 73760 Ostfildern (DE)
(72) Erfinder: Hansen, Melf, 73666 Baltmannsweiler (DE); Walter, Herbert, 73061 Ebersbach (DE)
(74) Vertreter: Patentanwälte Ruff, Wilhelm, Beier, Dauster & Partner

(56) Entgegenhaltungen:
- EP-A- 0 692 408
- EP-A- 1 225 093
- DE-A- 4 016 707
- DE-U- 20 104 832

## Beschreibung

Die Erfindung betrifft eine Schutzvorrichtung für ein Kraftfahrzeug, mit einem zwischen einer kompakt zusammengefügten Ruheposition und einer ausgezogenen Endposition beweglich gelagerten Flächengebilde, das über seinen Ausziehweg in fahrzeugseitigen Führungen gelagert ist, wobei dem Flächengebilde auf gegenüberliegenden Seiten jeweils eine Antriebseinheit zugeordnet ist, die durch Synchronisierungsmittel im Gleichlauf betreibbar sind, wobei die beiden Antriebseinheiten durch ein mechanisches Synchronisationsgetriebe miteinander verbunden sind, das ein längserstrecktes, flexibel gestaltetes Übertragungsmittel aufweist, das mit den beiden Antriebseinheiten gekoppelt ist.

Eine derartige Schutzvorrichtung ist aus der DE 201 04 832 bereits bekannt. Die bekannte Schutzvorrichtung offenbart eine horizontale Laderaumabdeckung für einen Laderaum eines Kraftfahrzeugs, bei der ein flexibles Flächengebilde in einem laderaumfest positionierten Kassettengehäuse auf- und abwickelbar gelagert ist und ein in Auszugrichtung vorderer Stirnendbereich in laderaumseitigen Führungen längsverlagerbar geführt ist. Der Stirnendbereich des flexiblen Flächengebildes ist in den Führungsschienen an den gegenüberliegenden Seitenwandungen durch drucksteife, längserstreckte Übertragungsmittel bewegbar, denen jeweils ein Antriebsmotor zugeordnet ist. Die beiden Antriebsmotoren sind über eine mechanische Synchronisationswelle miteinander verbunden, um einen gleichmäßigen Vortrieb für beide Ränder des Stirnendbereiches des flexiblen Flächengebildes zu ermöglichen.

Die DE 40 16 707 A1 betrifft eine weitere Antriebseinrichtung für eine Laderaumabdeckung, bei der in jeder seitlichen Führungsschiene jeweils ein Zahnstangentrieb vorgesehen ist. Die beiden Zahnstangentriebe sind über ein gemeinsames Antriebsritzel angetrieben, das wiederum von einem einzigen Antriebsmotor beaufschlagt wird.

Eine weitere Schutzvorrichtung ist in Form einer Laderaumabdeckung aus der DE 198 25 353 A1 bekannt. Die bekannte Laderaumabdeckung weist ein bahnförmiges Flächengebilde auf, das zwischen einer Ruheposition und einer ausgezogenen Endposition in einem Laderaum beweglich angeordnet ist. An einem vorderen Stirnende des bahnförmigen Flächengebildes ist eine Auszugleiste vorgesehen, die an gegenüberliegenden Seiten in jeweils einem Mitnehmer geführt ist. Die auf gegenüberliegenden Fahrzeugseiten angeordneten Mitnehmer sind Teil jeweils eines Antriebsstranges und durch diesen Antriebsstrang jeweils in Längsrichtung des Laderaumes beweglich. Durch die Bewegung der Mitnehmer wird auch die Auszugsleiste bewegt, wodurch das Flächengebilde in entsprechender Weise ausgezogen oder aufgewickelt wird. Jedem Antriebsstrang ist auf jeder Fahrzeugseite jeweils eine elektrische Antriebseinheit zugeordnet. Die beiden elektrischen Antriebseinheiten sind mittels einer elektronischen Drehzahlregelung synchronisiert betreibbar, wodurch gewährleistet ist, dass die Mitnehmer in einem Gleichlauf geführt werden.

Aufgabe der Erfindung ist es, eine Schutzvorrichtung der eingangs genannten Art zu schaffen, die mit einfachen Mitteln eine exakte Bewegung des Flächengebildes ermöglicht.

Diese Aufgabe wird dadurch gelöst, dass die beiden Antriebseinheiten in entsprechenden Seitenwandungen eines Kraftfahrzeug-Laderaumes integriert sind, und dass das flexibel gestaltete Übertragungsmittel durch Umlenkungen der Kraftübertragung entweder über den Bodenbereich oder den Dachbereich des Laderaums des Kraftfahrzeugs geführt ist. Durch die erfindungsgemäße Lösung wird eine äußerst einfach und kostengünstig gestaltete, robuste und funktionssichere Synchronisierung erzielt. Mittels äußerst weniger, unelektrischer Bauteile ist eine Synchronisierung der Antriebseinheiten erzielbar, die unempfindlich bei hohen Temperaturschwankungen, bei Feuchtigkeit und ähnlichem bleibt.

Das längserstreckte Übertragungsmittel überbrückt die Entfernung zwischen den Antriebseinheiten. Da gemäß der Erfindung die Antriebseinheiten auf gegenüberliegenden Fahrzeugseiten in entsprechenden Seitenwandungen eines Kraftfahrzeug-Laderaumes integriert sind, wird gemäß der Erfindung das Ubertragungsmittel entweder über den Bodenbereich oder über den Dachbereich des Laderaumes geführt. Das Übertragungsmittel ist gemäß Erfindung flexibel gestaltet, um Umlenkungen der Kraftübertragung zu ermöglichen.

In weiterer Ausgestaltung der Erfindung ist als Übertragungsmittel ein flexibles Zug-/Druckmittel vorgesehen. Als Zug-/Druckmittel, das sowohl Zug- als auch Druckbelastungen übertragen kann, ist vorzugsweise eine flexible Zahnstange, ein Bowdenzug oder ähnliches vorgesehen.

In weiterer Ausgestaltung der Erfindung ist als Übertragungsmittel eine flexible Drehmomentübertragungswelle vorgesehen, die mit Antriebswellen der Antriebseinheiten gekoppelt ist. Als flexible Drehmomentübertragungswelle ist insbesondere eine flexible Gewindespindel vorgesehen, die mit entsprechenden Gewindeschnecken im Bereich der Antriebswellen der Antriebseinheiten gekoppelt ist.

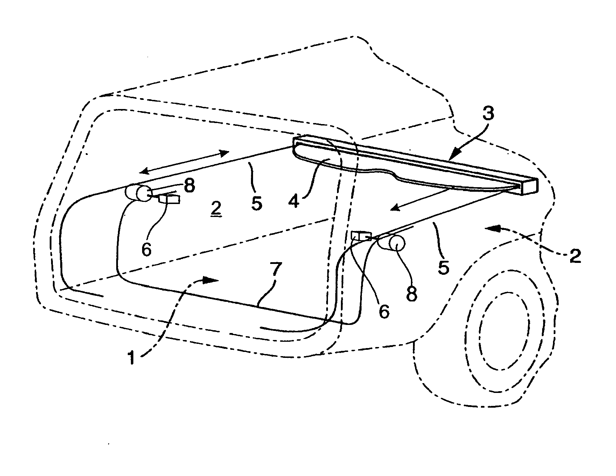

Weitere Vorteile und Merkmale der Erfindung ergeben sich aus den Ansprüchen. Nachfolgend ist eine bevorzugte Ausführungsform der Erfindung beschrieben und anhand der Zeichnung dargestellt.

Die einzige Zeichnung zeigt schematisch eine Ausführungsform einer erfindungsgemäßen Schutzvorrichtung für einen Laderaum eines Kraftfahrzeugs.

Als Schutzvorrichtungen sind neben Laderaumabdeckungen auch Laderaumabtrennungen und Sonnenschutzeinheiten im Bereich von Kraftfahrzeugscheiben anzusehen.

In einem Laderaum 1 eines Kraftfahrzeugs, vorliegend in Form eines Kombi-Personenkraftwagens, ist als Schutzvorrichtung eine Laderaumabdeckung 3 vorgesehen, die unmittelbar hinter einer nicht näher dargestellten Rückenlehnenanordnung einer Fondsitzbank positioniert ist und sich zwischen gegenüberliegenden Seitenwandungen 2 des Laderaumes 1 erstreckt. Die Laderaumabdeckung 3 weist ein Kassettengehäuse auf, das fahrzeugfest im Bereich der Rückenlehnenanordnung oder im Bereich der gegenüberliegenden Seitenwandungen 2 verankert ist. In dem Kassettengehäuse ist ein bahnförmiges Flächengebilde aufrollbar gelagert. Hierzu ist das Flächengebilde auf einer Rollowelle befestigt, die in dem Kassettengehäuse drehbar gelagert ist. Auf die Rollowelle wirkt in grundsätzlich bekannter Weise eine Rückholfeder, die als Antriebseinheit in Form eines Federspeichers das Flächengebilde in Aufwickelrichtung belastet. An einem vorderen Stirnende des Flächengebildes ist ein formstabiles Auszugteil 4 angeordnet, das vorliegend als Konturteil gestaltet ist. Das Auszugteil 4 ist im Bereich der gegenüberliegenden Fahrzeugseiten mittels entsprechender Führungselemente an jeweils einen Antriebsstrang 5 gekoppelt, die jeweils eine Antriebseinheit 6, vorliegend in Form eines Elektromotors, aufweisen. Bei anderen Ausführungsformen der Erfindung sind pneumatische, hydraulische oder mechanische Antriebseinheiten vorgesehen. Durch Bewegungen der beiden Antriebsstränge 5 wird das Auszugteil 4 ebenfalls bewegt, und zwar in seiner Auszugebene.

Um zu jedem Zeitpunkt einen Gleichlauf der beiden Antriebseinheiten 6 zu erzielen, ist ein mechanisches Synchronisationsgetriebe, vorliegend in Form eines flexiblen Zug-/Druckmittels, nämlich in Form einer flexiblen Zahnstange, vorgesehen. Die Zahnstange 7 ist mittels nicht näher dargestellter Umlenkführungen in den Seitenwandungen 2 und unterhalb eines Laderaumbodens hindurch verlegt. Auch die beiden Antriebsstränge 5 weisen jeweils einen Zahnriemen- oder Zahnstangentrieb auf. Um entsprechende Bewegungsübertragungen der elektrischen Antriebsmotoren der Antriebseinheiten 6 auf die Antriebsstränge 5 zu übertragen, ist auf jede Antriebswelle jedes Antriebsmotors 6 ein Antriebsritzel 8 aufgesetzt, das mit der entsprechenden Zahnstange kämmt. Zudem kämmt jedes Antriebsritzel 8 der beiden Antriebseinheiten 6 mit der zur Synchronisierung dienenden Zahnstange 7, so dass Bewegungen des einen Ritzels 8 zwangsläufig im gleichen Verhältnis auf das andere Antriebsritzel auf der gegenüberliegenden Fahrzeugseite und auf den entsprechend gegenüberliegenden Antriebsstrang 5 übertragen werden. Neben der flexiblen Zahnstange 7 und entsprechenden, im Fahrzeuginnenraum verlegten Führungen für die flexible Zahnstange 7 sind keine weiteren Bauelemente notwendig, um die gewünschte mechanische Synchronisierung der beiden Antriebseinheiten 6 zu erzielen.

## Patentansprüche

1. Schutzvorrichtung für ein Kraftfahrzeug, mit einem zwischen einer kompakt zusammengefügten Ruheposition und einer ausgezogenen Endposition beweglich gelagerten Flächengebilde, das über seinen Ausziehweg in fahrzeugseitigen Führungen gelagert ist, wobei dem Flächengebilde auf gegenüberliegenden Seiten jeweils eine Antriebseinheit zugeordnet ist, die durch Synchronisierungsmittel im Gleichlauf betreibbar sind, wobei die beiden Antriebseinheiten (6) durch ein mechanisches Synchronisationsgetriebe (7) miteinander verbunden sind, wobei das Synchronisationsgetriebe ein längserstrecktes, flexibel gestaltetes Übertragungsmittel (7) aufweist, das mit den beiden Antriebseinheiten (6) gekoppelt ist
**dadurch gekennzeichnet, dass**
die beiden Antriebseinheiten (6) in entsprechenden Seitenwandungen (2) eines Kraftfahrzeug-Laderaumes integriert sind, und dass das flexibel gestaltete Übertragungsmittel (7) durch Umlenkungen der Kraftübertragung entweder über einen Bodenbereich oder einen Dachbereich des Laderaumes des Kraftfahrzeugs geführt ist.

2. Schutzvorrichtung nach Anspruch 1, **dadurch gekennzeichnet, dass** als Übertragungsmittel ein flexibles Zug-/Druckmittel (7) vorgesehen ist.

3. Schutzvorrichtung nach Anspruch 1, **dadurch gekennzeichnet, dass** als Übertragungsmittel eine flexible Drehmomentübertragungswelle vorgesehen ist, die mit Antriebswellen der Antriebseinheiten gekoppelt ist.

## Claims

1. Protective device for a motor vehicle having a flat article movably mounted between a compactly contracted rest position and an extended end position and mounted over its extension distance in guides provided in the vehicle, the flat article being assigned a drive unit on each opposite side and operable in a synchronous movement by synchronization means, the two drive units (6) being connected to one another by a mechanical synchronization gear (7), said synchronization gear having a longitudinally extended and flexibly designed transmission means (7) connected to the two drive units (6),
**wherein**
the two drive units (6) are integrated into appropriate side walls (2) of a vehicle luggage compartment and the flexibly designed transmission means (7) is guided by diverting the power transmission either through a floor area or a roof area of the luggage compartment of the vehicle.

2. Protective device according to Claim 1, wherein a flexible push/pull means (7) is provided as the transmission means.

3. Protective device according to Claim 1, wherein a flexible torque transmission shaft connected to drive shafts of the drive units is provided as the transmission means.

## Revendications

1. Dispositif de protection pour un véhicule, avec une structure plane montée de manière à pouvoir se déplacer entre une position de repos sous forme repliée de façon compacte et une position finale sous forme déployée, laquelle structure plane est montée le long de sa trajectoire de déploiement dans des guides s'étendant sur les côtés du véhicule, sachant qu'une unité d'entraînement est associée à la structure plane sur chacun des côtés opposés, lesquelles peuvent être commandées de manière synchronisée grâce à des moyens de synchronisation, que les deux unités d'entraînement (6) sont reliées entre elles par un dispositif de synchronisation mécanique (7), que le dispositif de synchronisation présente un moyen de transmission (7) flexible s'étendant longitudinalement et couplé aux deux unités d'entraînement (6),
**caractérisé en ce que**
les deux unités d'entraînement (6) sont intégrées dans les parois latérales (2) respectives d'un compartiment à bagages de véhicule, et que le moyen de transmission flexible (7) est conduit par des déviations de la transmission de force soit le long d'une partie inférieure, soit le long d'une partie supérieure du compartiment à bagages du véhicule.

2. Dispositif de protection selon la revendication 1, **caractérisé en ce qu'**est prévu un moyen de pression / traction flexible (7) en tant que moyen de transmission.

3. Dispositif de protection selon la revendication 1, **caractérisé en ce qu'**est prévu un arbre de transmission de couple flexible en tant que moyen de transmission, lequel arbre est couplé à des arbres d'entraînement des unités d'entraînement.
